# FASCICULE DE BREVET EUROPEEN

(11) **EP 0 357 741 B1**
(45) Date de publication et mention de la délivrance du brevet: **19.01.1994**
(21) Numéro de dépôt: 89903168.6
(22) Date de dépôt: 06.03.1989
(51) Int. Cl.: A01N 25/06

(54) **MELANGES INSECTICIDES CONDITIONNES ET PROCEDE DE TRAITEMENT INSECTICIDE**
KONDITIONIERTE INSEKTIZIDE MISCHUNGEN UND VERFAHREN ZUR INSEKTIZIDEN BEHANDLUNG
PREPARED INSECTICIDAL MIXTURES AND PROCESS FOR INSECTICIDAL TREATMENT

(30) Priorité: 10.03.1988 FR 8803104
(43) Date de publication de la demande: 14.03.1990
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: PEAN, Jean-Louis, F-91310 Montlhéry (FR); MIZANDJIAN, Jean-Luc, F-91430 Igny (FR)
(74) Mandataire: Le Moenner, Gabriel
(86) Numéro de dépôt international: FR8900090
(87) Numéro de publication internationale: WO8908391

(56) Documents cités:
- GB-A- 1 554 774
- CENTRAL PATENTS INDEX, Basic Abstracts Journal, section C: AGDOC, week D42, 09 December 1981, Derwent Publications Ltd., London (GB); no. 76973D/42#
- CENTRAL PATENTS INDEX, Basic Abstracts Journal, section C: AGDOC, week B42, 12 December 1979, Derwent Publications Ltd., London (GB); no. 77153B/42#

## Description

La présente invention concerne des mélanges insecticides conditionnés et des procédés de traitement préventif ou curatif.

La lutte contre la présence d'insectes a pour objectif d'éviter la dégradation de végétaux et de denrées alimentaires lors de leur production, transfert, stockage, et d'assurer le maintien de l'hygiène de locaux sanitaires ou d'élevage.

Les insecticides sont mis en oeuvre suivant diverses techniques. Les méthodes ULV (ultra low volume; à volume ultra réduit) utilisent des appareillages électriques qui fractionnent la solution insecticide sous l'effet de la force centrifuge, à la périphérie d'un disque en rotation rapide.

La technique par pulvérisation consiste à solubiliser l'insecticide dans une phase aqueuse et pulvériser le mélange par mise en pression dans une pompe et passage dans une buse. L'insecticide est ainsi diffusé dans l'atmosphère ambiante, sur les végétaux et les parois des lieux infestés sous forme de gouttelettes d'un diamètre supérieur ou égal à 200 micromètres. La taille relativement importante des gouttes obtenues limite l'efficacité du traitement, du fait de la présence de zones non traitées et de stratification, et l'emploi de pompes de pressurisation de l'insecticide cause de fréquents problèmes d'encrassement. Cette technique est de moins en moins mise en oeuvre.

On peut utiliser des insecticides prêts à l'emploi, solubilisés dans des solvants organiques, selon la technique de nébulisation. Cette technique consiste à disperser des gouttelettes d'environ 50 micromètres dans l'atmosphère par injection avec de l'air comprimé dans des bases spécialement conçues. Ce traitement nécessite l'utilisation d'un compresseur d'air et le poids des particules obtenues engendrent souvent une mauvaise homogénéisation de l'insecticide dans l'air ambiant et sur les surfaces traitées.

Le traitement insecticide pour la protection de produits végétaux ou alimentaires et pour le maintien de l'hygiène de locaux nécessite l'utilisation d'un insecticide prêt à l'emploi, une diffusion homogène du produit dans l'atmosphère et un traitement efficace de toutes les surfaces, ainsi qu'une mise en oeuvre simple voire automatisée.

Il a été trouvé des mélanges insecticides conditionnés sous pression permettant un traitement préventif ou curatif de divers locaux agricoles et industriels dans d'excellentes conditions d'efficacité.

Ces mélanges insecticides conditionnés sous pression sont constitués par le produit insecticide sous forme solubilisée dans du dioxyde de carbone liquide et un co-solvant, maintenus à la température ambiante sous une pression au moins égale à la tension de vapeur du dioxyde de carbone, de 5,8 MPa à 20 mégapascals (MPa).

Les mélanges insecticides sont de préférence conditionnés sous une pression comprise entre 8 et 20 mégapascals par pressurisation par de l'azote gazeux.

Le dioxyde de carbone est utilisé au titre d'agent solvant et de propulseur du mélange : produit insecticide-cosolvant.

La pressurisation à l'azote gazeux permet une meilleure purge des canalisations de distribution et évite la formation de glace carbonique. Il a été en outre observé que la pressurisation par N₂ gazeux assure une injection homogène du mélange insecticide par un débit plus régulier. A titre d'exemple, la variation relative du débit de soutirage d'un stockage bouteille est de 25 % avec du CO₂ à 60 bars, 20°C alors qu'elle n'est plus que de 5 % avec du CO₂ pressurisé par de l'azote gazeux à 100 bars, 20°C.

L'addition d'azote entraîne aussi une dissolution de ce gaz dans le CO₂ liquide et l'atomisation - détente du mélange à pression atmosphérique - généralement des gouttelettes plus fines qu'avec CO₂ seul car fractionnées par la désorption de l'azote initialement dissous.

Suivant la nature chimique du produit insecticide le tiers ou co-solvant peut être choisi parmi un grand nombre de composés tels que paraffine, naphtène, oléfine, composé aromatique, hydrocarbure chloré, et pétrole désodorisés. Le chlorure de méthylène et le pétrole désodorisé sont d'excellents co-solvants. On utilisera de préférence un pétrole désodorisé, mélange d'hydrocarbures de C8 à C11 et de point d'ébullition à pression atmosphérique de 100 à 150°C.

Le produit insecticide peut être choisi parmi les insecticides connus, couramment utilisés, pyréthines naturelles, les pyréthrinoïdes de synthèse ou parmi les organo phosphorés. On utilisera de préférence une pyréthrine de synthèse telle la deltaméthrine ou la bioresméthrine.

Dans ce cas particulier les teneurs massiques des composés du mélange insecticide aérosol peuvent être comprises entre 0,01 et 3 % pour les pyréthrinoïdes, 1 à 30 % pour le co-solvant, le complément à 100 par le dioxyde de carbone et l'azote pour obtenir une pressurisation de 5,8 à 20 MPa pour une température maximale de 50°C.

L'utilisation d'un agent synergisant jusqu'à une teneur massique de 30 % peut être avantageuse. Afin de renforcer le pouvoir insecticide du produit, on pourra rajouter un agent synergisant dans le mélange, de préférence du piperonyl butoxide.

Le traitement insecticide est réalisé par une technique d'aérosolisation, selon laquelle le mélange sous pression est dispersé sous forme de fines gouttelettes de 0,1 à 50 micromètres, à travers un moyen d'atomisation.

La présence du dioxyde de carbone liquide en amont et sa vaporisation en aval du moyen d'atomisation augmente l'énergie de fractionnement, et la taille des gouttes générées est inférieure à celle habituellement obtenue avec de l'air comprimé. Les fines gouttelettes pulvérisées suivent les mouvements de convection dans le local traité en limitant toute stratification.

Chaque réservoir de mélange insecticide est équipé d'un tube plongeur afin d'assurer le soutirage en phase liquide et alimenter une canalisation de distribution. L'aérosolisation est réalisée à travers un système d'atomisation, par exemple à travers une buse à effet tourbillonnaire.

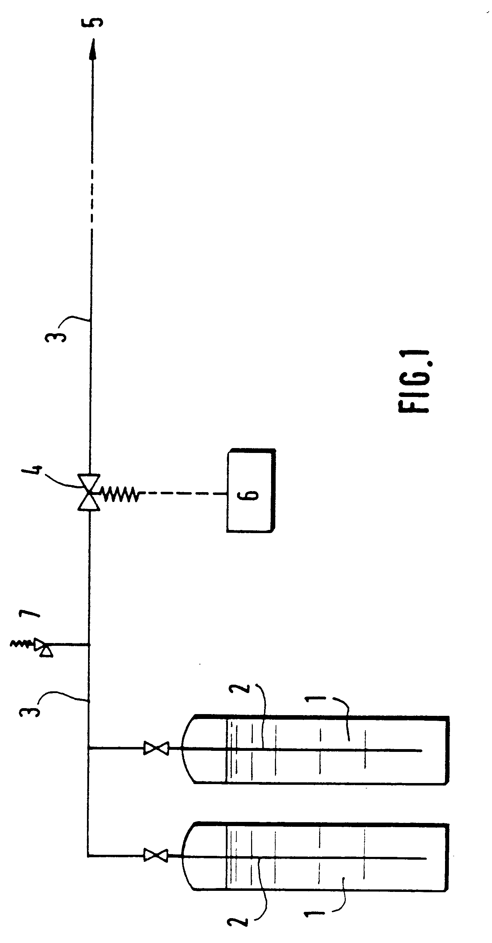

Le système d'injection, dont un exemple non limitatif est représenté sur la figure 1 du dessin annexé, comporte un ou plusieurs stockages (1) de mélange insecticide/dioxyde de carbone/co-solvant avec tube plongeur (2) qui alimentent une canalisation de distribution (3) par l'intermédiaire d'une vanne (4), l'aérosolisation étant obtenue à travers une ou plusieurs buses ou système d'atomisation (5).

Chaque traitement se déroule par cycles d'injection et la vanne (4) peut être asservie à une minuterie (6). Le circuit est équipé d'organes de sécurité, soupape de détente (7) par exemple.

Le diamètre intérieur de la canalisation d'injection sera supérieur ou égal à 4 mm afin d'éviter les pertes de charge entre le stockage et l'injection.

Le système d'atomisation est constitué de une ou plusieurs buses placées sur la canalisation de transport du mélange. Le diamètre de sortie des buses sera compris entre 0,12 et 0,5 mm afin d'obtenir une taille moyenne de gouttelettes de 1 micromètre. On utilisera de préférence des buses à effet tourbillonnaire (canaux d'alimentation de l'orifice de sortie inclinés) et la projection du produit est assurée sur une dizaine de mètres sous forme d'un cône plein d'angle 5 à 10°.

La taille des gouttelettes obtenues est de l'ordre de 1 micromètre et permet une diffusion homogène du produit dans l'espace ou sur la surface traitée. Cette taille, environ 10 à 20 fois plus fine que celle obtenue par des traitements d'atomisation - nébulisation classiques, est due à une pressurisation du mélange supérieure ou égale à 60 bars, 2°C et elle est accentuée par, lors d'une pressurisation complémentaire par azote, à l'énergie de désorption - fractionnement de N₂ dissous issue de la détente du mélange.

Il a été constaté que la présence d'un gaz dissous, tel que l'azote, dans le dioxyde de carbone liquide à une pression égale ou supérieure à 8 MPa, évite lors de la vidange de tomber dans une plage de pression où le dioxyde de carbone est solide, cause de bouchage et de mauvais fonctionnement (débit irrégulier, restitution incomplète du mélange utilisé).

Les mélanges insecticides - dioxyde de carbone liquide-cosolvant conditionnés sous pression permettent un traitement préventif ou curatif par aérosolisation des locaux, agricoles, publics ou industriels. On peut citer les serres, hangars agricoles, silos et système de transport de grain, les enceintes de stockage et transport de denrées alimentaires, les locaux sanitaires et d'élevage.

Le traitement assure un effet d'abatage et/ou létal sur les insectes volants (mouches, moustiques, lépidoptères...), les insectes rampants (fourmis, blattes...) et les coléoptères, en particulier des denrées stockées (rhizoperta, sitophilus, tribolium).

On note en outre un effet de débusquage et de rémanence sur des supports divers tels la tôle ou le parpaing.

Le procédé peut également s'appliquer à la désinsectisation en hygiène publique dans des locaux fermés (hôtels, magasins, industries, bureaux... ou sur des aires de plein air (aires agricoles, cours de fermes, parking, terrains de sport...).

Il est donné, les exemples suivants de désinsectisation.

### Exemple 1 :

Afin de désinsectiser une serre de production de concombres, divisée en travées de végétaux, on utilise des bouteilles de 30 kg conditionnées selon l'invention, à raison d'une bouteille pour 1700 m³ de local traité.

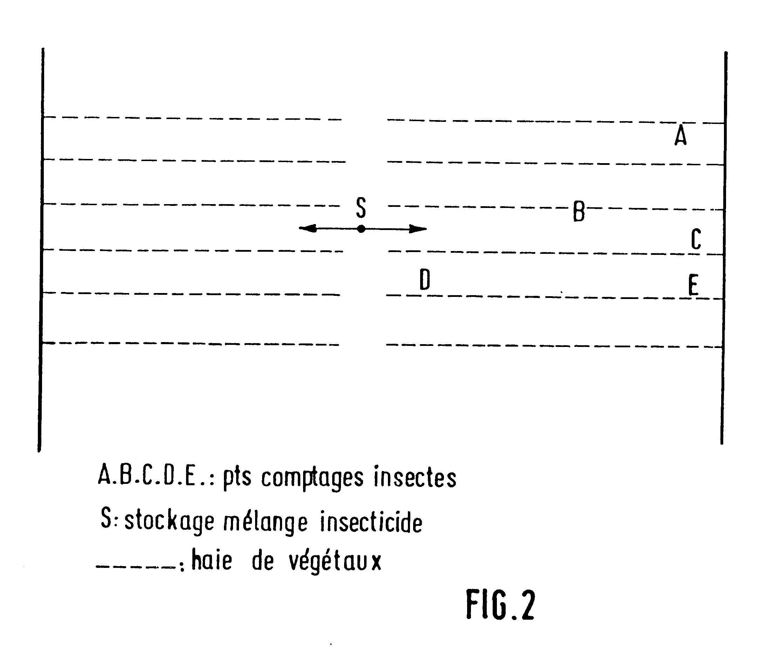

La géométrie du volume traité est la suivante : longueur = 47 m, largeur = 15,75 m (5 travées de végétaux) et hauteur d'environ 2,2 m. La bouteille de mélange insecticide est placée au centre du local à traiter et est équipée de deux tubes d'injection d'un diamètre de 4/6 mm et d'une longueur de 3 mètres. Chaque tube est muni à son extrémité de deux buses de 0,25 mm de diamètre situées dans un plan horizontal à environ 1,2 m du sol. Alimentée sous une pression de 5,8 MPa par le mélange insecticide, chaque buse a un débit de 1g mélange/seconde. La figure 2 du dessin annexé schématise le montage réalisé, S désigne le stockage du mélange insecticide, les pointillés, les haies de végétaux et les lettres A, B, C, D, E les points de comptage des insectes.

La composition du mélange injecté est la suivante :

| | |
|---|---|
| Deltaméthrine | 4,25 g |
| Chlorure de méthylène (CH₂Cl₂ | 1,68 kg |
| CO₂ liquide | 25,32 kg |
| CO₂ phase gazeuse | 2,0 kg |

Le traitement insecticide d'une durée de 2 heures est suivi d'une incubation de 24 heures et d'un comptage des insectes à divers points du local traité, selon la figure 2. La mortalité observée des pucerons est totale alors que l'on constate une forte réduction des aleurodes (mouche blanche). La population d'aleurodes est comptabilisée sur 4 feuilles et présentée dans le tableau I.

**TABLEAU 1**

| Points comptages | avant traitement | 24h après traitement |
|---|---|---|
| PT A | 15 | 1 |
| PT B | 25 | 4 |
| PT C | 15 | 1 |
| PT D | 20 | 3 |
| PT E | 15 | 4 |

### Exemple 2 :

Une bouteille de mélange, conditionnée selon l'invention, est utilisée pour la désinsectisation d'un hangar agricole. Ce local a une largeur de 11 mètres, une longueur de 14 mètres; la hauteur sur les côtés est de 5 mètres et celle du sommet central de 6 mètres. Le volume total est d'environ 750 m³.

La formulation du mélange est la suivante (fractions massiques):

| | |
|---|---|
| - deltaméthrine | 0,6 % |
| - piperonyl butoxide | 3 % |
| - solvant pétrolier désodorisé (solvens 100) | 27 % |
| - CO₂ et N₂ gazeux pour une pressurisation à 80 bars | QSP |

Le mélange est initialement conditionné avec du CO₂ liquide à une pression de 60 bars, puis pressurisé par de l'azote gazeux à 80 bars. La masse d'azote introduite pour pressuriser le mélange à 60 bars, 20°C à 80 bars est égale à 10 - 15 % de la masse de CO₂ utilisée.

Pour le traitement, on utilise une bouteille pressurisée contenant 1667 g de mélange en phase liquide (deltaméthrine : 10 g, solvens 100 : 450 g, pipéronyl butoxide : 50 g et CO₂ : 1157 g) et 158 g de CO₂ en phase gazeuse. L'azote complémentaire est ajouté à raison de 100 - 150 g.

La dose d'insecticide utilisée est contrôlée par la durée d'injection à débit constant.

L'appareillage de traitement est installé sur un petit côté du local, sur l'axe central.

La bouteille de mélange insecticide est équipée d'un tube plongeur relié à une canalisation inox de 4 mm de diamètre intérieur et d'une longueur de 10 mètres. La canalisation part de la bouteille à la verticale, décrit une épingle à cheveux et redescend jusqu'au point d'injection placé à environ 1 mètre du sol. Une buse à effet tourbillonnaire de marque "LECHLER", type K 212 09511, de diamètre de sortie de 0,25 mm est placée à l'extrémité de la canalisation et son alimentation commandée à distance par une électrovanne placée immédiatement en aval de la buse.

L'injection est réalisée à un débit constant (± 5 %) de 80 g mélange par minute sous forme d'un cône plein d'angle de 5° avec un jet directionnel sur 10 mètres; un nuage se forme entre 10 et 15 mètres, matérialisant la zone terminale de l'effet de souffle.

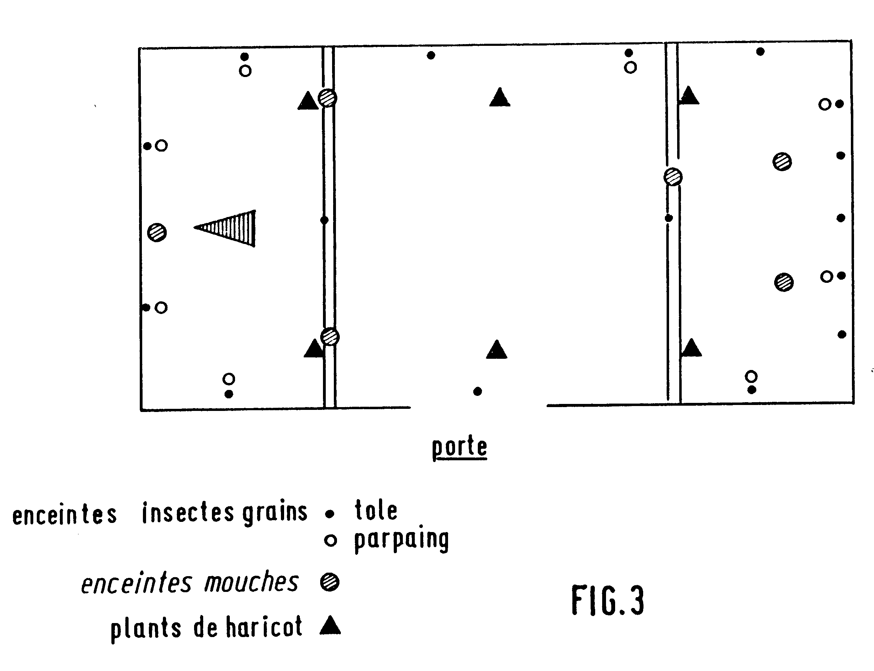

La dose insecticide appliquée est de 1,125 g de deltaméthrine synergisée, soit 1,5 deltaméthrine synergisée pour 1000 m³. Elle a permis d'atteindre une mortalité de 100 % sur les insectes placés à divers points du local tels que présentés à la figure 3 : mouches, rhizoperta dominica, setophilus granarius, tribolium confusum, fourmis et lepidoptères. Un effet de débusquage est notamment observé sur Sétophilus granarius et Tribolium confusum.

On note, de plus, un effet de rémanence sur support de type tôle, parpaing (tableau 2) ou feuilles de haricots. Ce tableau présente la moyenne de l'effet définitif en % de mortalité.

Il a été observé que la position verticale et coudée du tube d'injection de 10 mètres n'a pas modifié les caractéristiques de l'injection : régularité de débit, dépôt en canalisation.

**TABLEAU 2**

| Moyenne de l'effet définitif (% mortalité) | | |
|---|---|---|
| | Tôle | Parpaing |
| S. granarius | 71 % | 75 % |
| T. confusum | 44 % | 24 % |
| R. Dominica | 92 % | 100 % |

## Revendications

1. Mélanges conditionnés contenant un insecticide, caractérisé en ce qu'ils sont constitués par le produit insecticide sous forme solubilisée dans du dioxyde de carbone liquide et un co-solvant, maintenus à la température ambiante sous une pression comprise entre 5,8 et 20 MPa par pressurisation par de l'azote gazeux.

2. Mélanges conditionnés selon la revendication 1, caractérisés en ce que le co-solvant est choisi parmi les paraffine, naphtène, oléfine, composé aromatique, hydrocarbure chloré et pétrole désodorisé.

3. Mélanges conditionnés selon la revendication 2, caractérisés en ce que le co-solvant est le chlorure de méthylène.

4. Mélanges conditionnés selon la revendication 2, caractérisés en ce que le co-solvant est le pétrole désodorisé, mélange d'hydrocarbures de C8 à C11 à point d'ébullition compris entre 100 et 150°C à pression atmosphérique.

5. Mélanges conditionnés selon l'une quelconque des revendications 1 à 4, caractérisés en ce que le produit insecticide appartient à la classe des pyréthrinoïdes, pyréthrines et pyréthrinoïdes de synthèse.

6. Mélanges conditionnés selon l'une quelconque des revendications 1 à 5, caractérisés en ce que la composition massique est la suivante 0,01 à 3% de pyréthrinoïde, 1 à 30 % de co-solvant, complément à 100 par le dioxyde de carbone et l'azote.

7. Mélanges conditionnés selon la revendication 6, caractérisés en ce qu'ils contiennent un agent synergisant introduit dans une proprotion massique au plus de 30%, notamment le pipéronyl butoxide.

8. Mélanges conditionnés selon l'une quelconque des revendications 1 à 7, caractérisés en ce que ladite pression est comprise entre 8 et 20 MPa.

9. Traitement insecticide de mise en oeuvre des mélanges conditionnés selon l'une quelconque des revendications 1 à 8, caractérisés en ce que le traitement est réalisé par aérosolisation, selon laquelle ledit mélange est dispersé sous forme de fines goutellettes à travers un moyen d'atomisation.

10. Application des mélanges conditionnés selon l'une quelconque des revendications 1 à 8, au traitement préventif ou curatif par aérosolisation des locaux agricoles et industriels ou publics.

## Claims

1. Packaged mixtures containing an insecticide, characterised in that they are constituted by the insecticide product in the solubilized form in liquid carbon dioxide and a co-solvent, maintained at ambient temperature at a pressure between 5.8 and 20 MPa by pressurization by means of gaseous nitrogen.

2. Packaged mixtures according to claim 1, characterised in that the co-solvent is chosen from among paraffin, naphthene, olefin, aromatic compound, chlorinated hydrocarbon and deodorized petroleum.

3. Packaged mixtures according to claim 2, characterised in that the co-solvent is methylene chloride.

4. Packaged mixtures according to claim 2, characterised in that the co-solvent is deodorized petroleum, a mixture of C8 to C11 hydrocarbons having a boiling point between 100 and 150°C at atmospheric pressure.

5. Packaged mixtures according to any one of claims 1 to 4, characterised in that the insecticide product belongs to the class of pyrethrinoids, pyrethrins and synthetic pyrethrinoids.

6. Packaged mixtures according to any one of claims 1 to 5, characterised in that the mass composition is the following: 0.01 to 3% pyrethrinoid, 1 to 30% co-solvent, the remainder to 100 by carbon dioxide and nitrogen.

7. Packaged mixtures according to claim 6, characterised in that they contain a synergetic agent introduced in a mass ratio greater than 30%, notably piperonyl butoxide.

8. Packaged mixtures according to any one of claims 1 to 7, characterised in that the said pressure is between 8 and 20 Mpa.

9. Insecticide treatment for utilizing the packaged mixtures according to any one of claims 1 to 8, characterised in that the treatment is carried out by aerosol spraying, according to which the said mixture is dispersed in the form of fine droplets by an atomization means.

10. Application of the packaged mixtures according to any one of claims 1 to 8 to the preventative or curative treatment by aerosol spraying of agricultural and industrial or public premises.

## Patentansprüche

1. Konditionierte, ein Insektizid enthaltende Mischungen, dadurch gekennzeichnet, daß sie aus einem in flüssigem Kohlendioxyd und einem Lösungsvermittler gelösten insektiziden Erzeugnis bestehen, das mittels Druckerzeugung durch gasförmigen Stickstoff unter einem Druck zwischen 5,8 und 20 MPa auf Umgebungstemperatur gehalten wird.

2. Konditionierte Mischungen nach Anspruch 1, dadurch gekennzeichnet, daß der Lösungsvermittler aus Paraffin, Naphten, Olefin, einer aromatischen Verbindung, chloriertem Kohlenwasserstoff und geruchlos gemachtem Petroleum ausgewählt ist.

3. Konditionierte Mischungen nach Anspruch 2, dadurch gekennzeichnet, daß der Lösungsvermittler Methylenchlorid ist.

4. Konditionierte Mischungen nach Anspruch 2, dadurch gekennzeichnet, daß der Lösungsvermittler das geruchlos gemachte Petroleum, eine Mischung der hydrierten Kohlenwasserstoffe von C8 bis C11 mit einem Siedepunkt zwischen 100 und 150°C bei Atmosphärendruck, ist.

5. Konditionierte Mischungen nach einem der Ansprüche 1 bis 4, dadurch gekennzeichnet, daß das insektizide Erzeugnis zur Klasse der Pyrethrinoide, Pyrethrine und synthetischen Pyrethrinoide gehört.

6. Konditionierte Mischungen nach einem der Ansprüche 1 bis 5, gekennzeichnet durch folgende Zusammensetzung in Gew.-%: 0,01 bis 3% Pyrethrinoid, 1 bis 30% Lösungsvermittler, auf 100 ergänzt durch Kohlendioxyd und Stickstoff.

7. Konditionierte Mischungen nach Anspruch 6, dadurch gekennzeichnet, daß sie ein synergistisches Mittel umfassen, das in einem Gewichtsanteilverhältnis von höchstens 30% zugesetzt wird, insbesondere Piperonylbutoxid.

8. Konditionierte Mischungen nach einem der Ansprüche 1 bis 7, dadurch gekennzeichnet, daß der Druck zwischen 8 und 20 MPa liegt.

9. Insektizide Behandlung zur Anwendung der konditionierten Mischungen nach einem der Ansprüche 1 bis 8, dadurch gekennzeichnet, daß die Behandlung durch Aerosolbeaufschlagung vorgenommen wird, wodurch die Mischung in Gestalt feiner Tröpfchen mittels einer Zerstäubungseinrichtung verteilt wird.

10. Anwendung der konditionierten Mischungen nach einem der Ansprüche 1 bis 8 zur präventiven oder nachträglichen Behandlung durch Aerosolbeaufschlagung landwirtschaftlicher und industrieller oder öffentlicher Räumlichkeiten.
